# EUROPÄISCHE PATENTSCHRIFT

(11) **EP 1 135 033 B1**
(45) Veröffentlichungstag und Bekanntmachung des Hinweises auf die Patenterteilung: **20.04.2005**
(21) Anmeldenummer: 99972896.7
(22) Anmeldetag: 25.11.1999
(51) Int. Cl.: A23L 1/0522, A23L 1/217, A23L 1/24

(54) **VERFAHREN ZUR VERSTÄRKUNG DER PÜLPIGEN ODER GRIESSIGEN TEXTUR VON NAHRUNGSMITTELN**
METHOD FOR ENHANCING THE PULP-LIKE OR GRANULAR TEXTURE OF FOODSTUFFS
PROCEDE POUR LE RENFORCEMENT DE LA TEXTURE PULPEUSE OU GRANULEUSE DE PRODUITS ALIMENTAIRES

(30) Priorität: 01.12.1998 AT 202798
(43) Veröffentlichungstag der Anmeldung: 26.09.2001
(73) Patentinhaber: SÜDZUCKER AKTIENGESELLSCHAFT MANNHEIM/OCHSENFURT, 68165 Mannheim (DE)
(72) Erfinder: MIKLA, Ondrej, A-3425 Langenlebarn (AT); GRÜLL, Dietmar, A-3442 Langenschönbichl (AT)
(74) Vertreter: Pawloy, Peter Michael, Dipl.-Ing.
(86) Internationale Anmeldenummer: PCT/AT1999/000288
(87) Internationale Veröffentlichungsnummer: WO 2000/032061

(56) Entgegenhaltungen:
- EP-A- 0 796 868
- EP-A- 0 898 901
- DATABASE WPI Section Ch, Derwent Publications Ltd., London, GB; Class D13, AN 1972-57754T XP002136577 & JP 47 034934 B (JAPAN MAIZE PRODUCT CO LT)

## Beschreibung

Die gegenständliche Erfindung betrifft ein Verfahren zur Verstärkung der pülpigen oder grießigen Textur von pülpigen oder grießigen flüssigen bis pastösen Nahrungsmitteln.

Für ein Nahrungsmittel stellen die organoleptischen Merkmale "pülpig" oder "grießig" (englisch: pulpy, gritty) eine sensorische Kennzeichnung der Textur dar, welche durch das Vorhandensein von groben strukturierten Partikeln gekennzeichnet ist. Pülpige und grießige Texturen stehen im Gegensatz zu Texturen, welche als cremig oder glatt bezeichnet werden können. Unter Textur wird eine Gruppe physikalischer und sensorischer Eigenschaften verstanden, welche mit der Struktur des Produktes zusammenhängen. Textur kann durch den Tastsinn, üblicherweise im Mund, empfunden und in manchen Fällen auch objektiv als Funktion von Masse, Weg und Zeit gemessen werden. Zu den physikalischen Eigenschaften, welche für das gegenständliche Verfahren von Bedeutung sind, zählen rheologische Merkmale, wie Viskosität, Elastizität und Fließgrenze.

In diesem Zusammenhang wird aus Römpp's Chemie Lexikon, 9. Auflage, zitiert, daß unter "Pulpe" eine breiige, noch gröbere Partikel enthaltende Masse zu verstehen ist.

Gemäß der ISO Norm 11036 "Sensory analysis - Methodology - Texture profile" sind Pülpigkeit und Grießigkeit den geometrischen Eigenschaften (geometrical attributes) zuzuordnen und werden unter dem Sammelbegriff "Granularity" als jene geometrischen Textureigenschaften charakterisiert, die in Relation zur Wahrnehmung der Größe und der Form von Partikeln stehen und als gritty bzw. pulpy definiert sind. Unter Textur sind gemäß dieser Norm alle mechanischen, geometrischen und Oberflächeneigenschaften eines Produkts zu verstehen, welche durch mechanische, taktile und gegebenenfalls visuelle und auditorische Rezeptoren festgestellt werden. Für die sensorische Texturanalyse haben sich allgemein anerkannte Methoden der Nahrungsmittelanalytik eingebürgert, welche in einem umfangreichen Schrifttum festgehalten sind (z. B. Fliedner & Wilhelmi: "Grundlagen und Prüfverfahren der Nahrungsmittelsensorik", 1989, Behr's Verlag, Hamburg; Amerine et al.: "Principles of Sensory Evaluation of Food", 1965, Academic Press, New York; Moskowitz: "Food Texture", 1987, Marcel Deker, Inc., New York,). Neben diesen Literaturstellen und der genannten ISO Norm 11036 ist auch die ISO Norm 11035 "Sensory analysis - Identification and selection of descriptors for establishing a sensory profile by a multidimensional approach" zu nennen, gemäß welcher die Durchführung von sensorischen Paneltests und die Eigenschaften und die Auswahl der hiezu erforderlichen Panelisten bzw. Prüfer ausführlich festgelegt sind.

Entsprechend den allgemeinen Prinzipien der Sensorik kommen zur Texturbeurteilung je nach Zielsetzung zwei Arten von Prüfergruppen in Frage. Wenn die Reaktion der Verbraucher auf die Textur des Produktes untersucht werden soll, wird mit großen Konsumentengruppen gearbeitet. Geht es hingegen um eine verfeinerte Texturerfassung zur Abklärung der texturbildenden Parameter, wird mit einer kleinen, speziell ausgebildeten Prüfergruppe eine analytisch orientierte Texturprüfung durchgeführt.

Die instrumentelle Texturanalyse beinhaltet die Erfassung jener rheologischen Eigenschaften, welche mit der sensorisch wahrgenommenen Textur zusammenhängen. Die instrumentellen Methoden zur Ermittlung der Textureigenschaften von komplexen Nahrungsmittelsystemen können in folgende Gruppen eingeteilt werden:
- Quantitative Methoden zur Ermittlung von rheologisch exakt definierten Größen,
- qualitative Methoden mit Geräten, welche die Nahrungsmittel einer mechanischer Wirkung (Scherung, Deformation) aussetzen.
Dabei erlauben die gemessenen Werte zwar keine direkte Ableitung rheologisch exakt definierter Größen, doch werden erfahrungsgemäß die rheologischen Eigenschaften gut wiedergegeben, wobei sie gut mit sensorisch ermittelten Texturmerkmalen korrelieren.

Neben Proteinen, Lipiden und diversen Sacchariden gehört Stärke zu den wichtigsten Texturogenen eines Nahrungsmittels. Zu den häufigsten texturbildenden Aufgaben einer Stärke in komplexen Nahrungsmittelsystemen gehören: das Binden einer erforderlichen Menge Wasser und dessen kontrollierte Freigabe und bzw. oder dessen Zurückhaltung, die Modifizierung der rheologischen Eigenschaften durch Ausbildung eines dreidimensionalen Netzwerks im Einklang und oft in Synergie mit anderen vorhandenen Texturbildnern sowie dessen Stabilisierung, was zur Entstehung einer weichen, bis hin zu einer festen gelartiger Struktur führen kann. Die Textur trägt häufig entscheidend zur Steigerung des Geschmacks eines Nahrungsmittels bei.

Die Verwendung von diversen Stärken und deren Derivaten in der gewerblichen und industriellen Fertigung von Nahrungsmitteln gehört seit langem zur üblichen Produktionspraxis. Durch Einsatz von nativer und bzw. oder modifizierter Stärke werden die sensorischen und physikalischen Eigenschaften der Lebensmittelprodukte maßgeblich beeinflußt, wodurch der gewünschte Genußwert der Produkte eingestellt werden kann. Die üblichen Stärken und Stärkederivate fördern in der Regel die Ausbildung cremiger oder glatter Texturen.

Der Rohstoff Stärke wird aus pflanzlichen Produkten, wie Getreide und Kartoffel, gewonnen, wobei in subtropischen Regionen auch noch andere Pflanzenprodukte industriell zur Stärkegewinnung genutzt werden. Chemisch betrachtet stellt die Stärke eine Mischung von zwei strukturell unterschiedlichen Polyglucanen dar, nämlich Amylose und Amylopektin, welche beide aus mehreren tausend verknüpften Glucosemolekülen bestehen. Amylose ist durch eine nahezu unverzweigte lineare Struktur verknüpfter Glucoseeinheiten gekennzeichnet. Im Amylopektin sind zahlreiche kürzere Moleküle amyloseähnlicher Struktur zu einer größeren verzweigten Struktur gebunden.

Die üblichen natürlichen Stärken enthalten, abhängig von der Pflanzenart, aus welcher sie gewonnen werden, 15% bis 30% Amylose. Spezielle, durch Kreuzung oder gezielte Genmanipulation gewonnene Pflanzengenotype können auch andere Anteile der beiden Stärkemoleküle enthalten. Bekannt sind sogenannte Hochamylosestärken mit einem Amylosegehalt bis zu 70%. Weiters sind auch sogenannte Amylopektinstärken bekannt, welche bis zu 98% Amylopektin enthalten. Eine derartige Amylopektinstärke ist die Wachsmaisstärke, welche aus einem Maisgenotyp gewonnen wird, bei dem die produzierte Stärke nahezu amylosefrei ist. Der Ausdruck "wachsartig" oder englisch "waxy" rührt von der Tatsache her, daß das Maiskorn ein wachsartiges Aussehen hat.

In solchen Staaten, in denen die vorherrschende Stärkequelle der Mais ist, ist es bekannt, bei qualitativ hochwertigen stärkehaltigen Nahrungsmitteln Wachsmaisstärke statt normaler Maisstärke zu verwenden. Das damit hervorgerufene organoleptische Gefühl wird als weniger klebrig, weniger ziehend und daher angenehmer bezeichnet.

Beispiele für in der Literatur genannte Methoden und Möglichkeiten zur Veränderung der physikalischen und organoleptischen Eigenschaften von Nahrungsmitteln sind die folgenden:

WO 93/22938 Unilever: Diese Schrift beschreibt stärkeverdickte Lebensmittel mit erhöhter Gefrier-Tau-Stabilität und "guter" Textur, wobei hier eine gute Textur als "smooth", d.h. glatt bezeichnet wird. Der Stärkebestandteil besteht aus einer Mischung von nativer Stärke und gescherter Amylopektin-Stärke, d.h. einer Amylopektin-Stärke, die mechanisch abgebaut ist und daher keinerlei Pülpigkeit hervorrufen kann.

SE 9502 629 Sveriges Staerkelseproducenter: Gemäß dieser Literaturstelle wird Amylopektin-Kartoffelstärke als Ersatz für Gummi arabicum in der Süßwarenherstellung verwendet. Das Ziel hiebei besteht darin, stabile klare Lösungen herzustellen, weshalb die Verfahrensschritte des Stärkeabbaus, der Hydrolyse und der Dextrinierung vorgenommen werden müssen. Dies weist eindeutig darauf hin, daß auch hier ein weitgehender Abbau der Molekülstruktur vorgenommen werden muß, bei dem eine pülpige und grießige Textur nicht mehr möglich ist.

WO 97/03573 Sveriges Staerkelseproducenter: Bei der Abfüllung von flüssigen oder stückig-flüssigen Nahrungsmitteln in Dosen besteht während der Manipulation und während des Transports der noch offenen Dosen die Gefahr eines Überschwappens der Flüssigkeit, sofern diese keine ausreichende Viskosität hat. Zur entsprechenden Erhöhung der Viskosität wurden bereits früher die verschiedensten Stärkeprodukte zugesetzt. Meistens wurden dann aber für das fertige Nahrungsmittel nach der Temperatursterilisation zu hohe Viskositäten bzw. eine unerwünschte Trübung des Nahrungsmittels festgestellt. Dagegen erwies sich Amylopektin-Kartoffelstärke aus genetisch hinsichtlich der Amylosebildung inhibierten Kartoffeln für diesen Zweck als besonders günstig, weil durch Zusatz dieser Amylopektin-Kartoffelstärke einerseits eine hohe Anfangsviskosität der in den Dosen befindlichen Flüssigkeit erreicht wird, diese Viskosität jedoch durch die Temperaturen der Konservierung wieder verloren geht und das fertige Nahrungsmittel außerdem noch klar bleibt und nicht durch Trübung unansehnlich wird. Das heißt, daß die Temperatureinwirkung bei der Konservierung des Nahrungsmittels in den Dosen so hoch sein muß bzw. so lange dauern muß, daß ein thermischer Abbau der Amylopektin-Kartoffelstärke erreicht wird.

EP 0 799 837 Avebe: Amylopektin-Kartoffelstärke in molekular dispergierter Form gemeinsam mit Emulgatoren ergibt in wässerigen Zusammensetzungen die Bildung von Komplexen (interaction products), die eine erwünschte Gelstruktur bzw. Viskosität der Zusammensetzungen bewirken.

Die Erwähnung der molekular dispergierten Form der Amylopektin-Kartoffelstärke zeigt, daß auch hier eine glatte Textur erwünscht ist, die gemäß der vorliegendne Erfindung ausdrücklich vermieden werden soll.

EP 0 769 501 Unilever: Hier wird ein Scherverfahren für Amylopektin-Stärke angegeben, durch welches die Nahrungsmittel eine glatte Textur und eine gute Gefrier-Tau-Stabilität, wie sie in der zuvor genannten WO 93/22938 erähnt werden, erhalten sollen. Dabei wird ausdrücklich erwähnt, daß die körnige Struktur der Stärke zerstört und das Amylopektin solubilisiert werden soll.

EP-A-0 796 868 offenbart den Einsatz von vernetzter Amylopektin-Kartoffelstärke zur Verbesserung von Geschmack, Textur und Aussehen von Lebensmittel.

EP-A-0 898 901 (relevant gemäß Art. 54(3) EPÜ) offenbart den Zusatz von enzymbehandelter Kartoffelstärke zu Tomatensauce.

Das Ziel der vorliegenden Erfindung, eine Verstärkung von Pülpigkeit und Grießigkeit eines Nahrungsmittels, wurde somit bisher weder erwähnt noch erreicht.

Die vorstehend gestellte Aufgabe wird erfindungsgemäß dadurch gelöst, daß dem Nahrungsmittel Amylopektin-Kartoffelstärke, d.h. Kartoffelstärke mit mindestens 95%, vorzugsweise mindestens 98% Amylopektingehalt, in einer die gewünschte organoleptische Veränderung des behandelten Nahrungsmittels bewirkenden Menge, insbesondere in kaltquellender Form, gegebenenfalls in Mischung mit anderen üblichen Stärkeprodukten, zugesetzt wird.

Es ist als ausgesprochen überraschend zu bezeichnen, daß eine bereits vorliegende pülpige Textur durch den Zusatz von Amylopektin-Kartoffelstärke deutlich intensiviert wird bzw. es durch den genannten Zusatz möglich wird, den Anteil des pülpigmachenden Bestandteils des Nahrungsmittels bei gleichbleibender Pülpigkeit zu verringern. Das heißt mit anderen Worten, daß in jedem Fall die Pülpigkeit des Nahrungsmittels verstärkt wird, nämlich entweder bei üblichem Gehalt an pülpigmachendem Bestandteil über das normale Ausmaß hinaus oder bei geringerem als üblichem Gehalt an pülpigmachendem Bestandteil bis zum üblichen Ausmaß.

Neben dem genannten Effekt, bei der Herstellung eines pülpigen Nahrungsmittels weniger von dem pülpigmachenden - und daher meist teuren - Bestandteil für dieses Nahrungsmittel verwenden zu können, wird auch noch festgehalten, daß diese Wirkung nicht nur durch mengenmäßig gleichen Ersatz des pülpigmachenden Bestandteils durch Amylopektin-Kartoffelstärke erreicht wird, sondern daß ein gewichtsmäßig wesentlich geringerer Anteil Amylopektin-Kartoffelstärke notwendig ist, um bei Erzielung des gleichen organoleptischen Eindrucks einen gewichtsmäßig größeren Anteil pülpigmachender Substanz zu ersetzen. Mit anderen Worten heißt das, daß das Nahrungsmittel bei gleicher Geschmackswirkung weniger Trockensubstanz enthalten kann, was nicht nur aus ökonomischer Sicht, sondern oft auch aus ernährungswissenschaftlicher Sicht von Bedeutung ist.

Es versteht sich von selbst, daß bei dem erfindungsgemäßen Verfahren eine Behandlung des Nahrungsmittels in einer Weise, daß die übermolekulare Struktur der Stärke verloren geht und ein molekular disperser Zustand erreicht wird, ausdrücklich vemieden werden muß. Der Fachmann weiß, daß jede Stärke durch die verschiedensten Maßnahmen, wie Erhitzen, Scheren etc., abgebaut werden kann und daß die Dauer dieser Maßnahmen von großem Einfluß auf die entstehende Molekülstruktur ist. Z.B. kann ein rasches und kurzes Erhitzen auf höhere Temperaturen die gleiche Wirkung haben wie ein langandauerndes Erhitzen auf niedrigere Temperaturen. Das gleiche gilt für das Scheren bei unterschiedlicher Temperatur mit unterschiedlicher Intensität und Dauer etc.

Amylopektin-Kartoffelstärke kann theoretisch durch chemische Abtrennung der Amylose aus normaler Kartoffelstärke hergestellt werden, doch ist diese Methode sehr aufwendig und teuer. Seit es durch gentechnische Veränderung der Kartoffel möglich geworden ist, die Amylosebildung bereits in der Kartoffel selbst zu verhindern, steht ein neuer Stärketyp zur Verfügung, welcher ohne chemische Verfahren nahezu ausschließlich aus Amylopektin besteht.
Somit wird bei dem erfindungsgemäßen Verfahren dem Nahrungsmittel bevorzugt eine Amylopektin-Kartoffelstärke aus einer durch Züchtung, Mutation oder molekularbiologische bzw. gentechnische Methoden zur Unterdrückung des Amylosegehalts veränderten Kartoffel zugesetzt.

Es hat sich gezeigt, daß diese bevorzugt aus transgenen Kartoffeln gewonnene Stärke und ihre physikalisch modifizierten und bzw. oder chemisch derivatisierten Formen zur Verstärkung der genannten Pülpigkeit oder Grießigkeit besonders gut geeignet sind und daß ihre Wirkung im Vergleich zu üblichen Stärken, insbesondere aber auch im Vergleich zu der bekannten Wachsmaisstärke, deutlich besser ist. Dieser Effekt, welcher nicht vorherzusehen war, ist durch die Ergebnisse der sensorischen und physikalischen Prüfungen belegt, welche im folgenden Versuchsteil näher beschrieben sind.

Es wird angenommen, daß das Phänomen der Steigerung von Pülpigkeit und Grießigkeit der Textur einerseits durch die erhöhte Stabilität der Stärkekörner der Amylopektin-Kartoffelstärke im Vergleich zu Amylose-Stärkekörnern, wie dies in der EP-0816299 diskutiert wird, und andererseits durch die größere räumliche Dimension der Körner der Kartoffelstärke im Vergleich zu Stärkekörnern aus anderen Rohstoffquellen erklärt werden kann. Neben den sensorischen Wirkungen üben die Stärkeprodukte aus Amylopektin-Kartoffelstärke einen positiven Einfluß auf die Viskosität und auf die Stabilität der Nahrungsmittel auf, wobei die vergleichsweise hohe Viskosität des Stärkekleisters der nativen Stärke ebenso wie der Derivate von Bedeutung ist. Auch die geringere Trübung des Stärkekleisters ist in diesem Zusammenhang als positiv zu nennen. Der gewünschte Genußwert der Nahrungsmittel wird durch die genannten Stärkeprodukte gesteigert oder überhaupt erst erreicht.

Unter physikalisch modifizierter Amylopektin-Kartoffelstärke werden Stärkeprodukte verstanden, welche durch Temperatur- und bzw. oder Druckbehandlung bzw. mechanische Einwirkung abgebaut und bevorzugt kaltlöslich gemacht wurden. Meistens sind diese Stärken in ihrer übermolekularen Struktur verändert. Chemisch derivatisierte Stärken weisen Veresterungen, Veretherungen und bzw. oder Vernetzungen der Moleküle auf. Die chemischen Veränderungen bewirken meist eine Stabilisierung des Stärkekoms. Häufig werden sowohl physikalische als auch chemische Methoden zur Veränderung der Stärke eingesetzt. Die Stärke wird bevorzugt in kaltquellender Form verwendet.

Von der ganzen Palette der Nahrungsmittel kommen für den Einsatz von amylopektinreicher Kartoffelstärke als Präkursor von pülpiger Textur hauptsächlich folgende Produktgruppen in Frage:
Suppen, Soßen, Dressings und Dips;
Tomatenketchup;
Kartoffelpüree;
frucht- und gemüsehaltige Getränke und Breie;
frucht-, nuß-, mohn- und topfenhaltige Füllmassen;
Grießpuddings und Desserts sowie
die Prämixe oder dehydratisierten Formen aller dieser Nahrungsmittel.

Die praktische Anwendung der genannten Stärkeprodukte kann genauso wie bei üblichen Stärkeprodukten in allen gängigen gewerblichen und industriellen Produktionsverfahren im Einklang mit der GMP (good inanufactory practice) erfolgen. Die genannten Stärkeprodukte, welche häufig in walzengetrockneter oder extrudierter Form eingesetzt werden, haben bevorzugt Partikelgrößen zwischen 0,250 mm und 2,00 mm, insbesondere zwischen 0,500 mm und 1,500 mm. Zum Einstellen der gewünschten Textur ist auch eine Zumischung der genannten Stärkeprodukte zu anderen üblichen Stärkeprodukten in einer Menge von 5% bis 90% möglich und gegebenenfalls von Vorteil.

Durch die Verwendung der Amylopektin-Kartoffelstärke können die Einsatzmengen jener Nahrungsmittelbestandteile, die sonst für die pülpige Struktur verantwortlich sind, ohne Einbußen bei der Textur um 15% bis 30% reduziert werden. Das stellt einen wichtigen wirtschaftlichen Vorteil dar. Bei Tomatenketchup handelt es sich z.B. hier um eine Verminderung des Gehaltes an Tomatenpüree. Auch bei Kartoffelpüree kann der Anteil an Kartoffelpulver durch den Zusatz von Amylopektin-Kartoffelstärke herabgesetzt werden, was neben geschmacklichen Vorteilen auch wirtschaftliche Vorteile bewirken kann.

Überraschenderweise hat sich im Zuge der Forschungen der Anmelderin auf diesem Gebiet gezeigt, daß ein Emulgatorzusatz zu einem pülpigen Nahrungsmittel diese Pülpigkeit sehr häufig zum Verschwinden bringt und daher genau den gegenteiligen Effekt hervorruft als gewünscht wird.

Das folgende Beispiel und die Ergebnisse der physikalischen und sensorischen Prüfungen zeigen die vorteilhaften Wirkungen des Zusatzes einer veresterten und vemetzten Amylopektin-Kartoffelstärke.

### Beispiel:

### Testprodukte:

Es wurde Tomatenketchup unter Zusatz von acetylierter und adipatvemetzter Amylopektin-Kartoffelstärke hergestellt. Die Komponenten wurden zu einer homogenen Mischung vermischt, unter ständigem Rühren auf 90°C aufgeheizt und 30 min bei dieser Temperatur gehalten. Nach dem Abkühlen auf 50°C wurden die Testprodukte in verschließbare Behälter abgefüllt. Bei den Vergleichsversuchen wurden jeweils ebensolche acetylierte und adipatvemetzte Stärkederivate, welche in gleicher Art und Weise hergestellt waren, verwendet. Die Rezepturen und die Ergebnisse der vorgenommenen physikalischen Messungen und der auf Pülpigkeit ausgerichteten sensorischen Untersuchung sind in der folgenden Tabelle 1 zusammengestellt:

**Tabelle 1**

| Stärkebasis | Produkt A Konventionelle Kartoffelstärke | Produkt B Konventionelle Wachsmaisstärke | Produkt C Amylopektin-Kartoffelstärke |
|---|---|---|---|
| Komponente | Gew.-% | Gew.-% | Gew.-% |
| Tomatenmark 3-fach konz. | 33,00 | 33,00 | 28,00 |
| Glucosesirup 40 DE, 80 Bx | 4,00 | 4,00 | 4,00 |
| Modifizierte Stärke | 2,00 | 2,00 | 3,00 |
| Kristallzucker | 16,20 | 16,20 | 16,20 |
| Essig (5%) | 15,00 | 15,00 | 15,00 |
| Kochsalz | 3,00 | 3,00 | 3,00 |
| Ka-Sorbat | 0,20 | 0,20 | 0,20 |
| Gewürze | 0,20 | 0,20 | 0,20 |
| Wasser | auf 100,00 | auf 100,00 | auf 100,00 |
| Fließgrenze | 30,2 Pa | 34,0 Pa | 25,1 Pa |
| Viskosität | 6800 mPa.s | 7200 mPa.s | 7000 mPa.s |

Die Testprodukte wurden wie folgt rheologisch untersucht:

### Fließgrenze:

Die Fließgrenze wurde mittels eines Bohlin CS 50 schubspannunggesteuerten Rheometers, das mit einem 4°/40 mm Kegel/Platte Meßsystem bestückt war, in einer dynamischen Rotationsmessung bei 25°C ermittelt. Meßtechnisch wird für diesen Test ein Schubspannungsbereich vorgegeben und in definierter Zeit linear durchfahren. Soferne ausreichend kleine Schubspannungen angelegt werden, zeigt sich auch unterhalb der Fließgrenze eine elastische Deformation, welche allmählich in Fließen übergeht. Wenn in diesem "Übergangsbereich" die momentane Viskosität berechnet wird, stellt das Maximum dieser Kurve ein hilfreiches Indiz für das beginnende Fließen dar. Die Schubspannung an dieser Stelle wird vollautomatisch ermittelt und als Fließgrenze angegeben (Bohlininfo, 7/95).

### Viskosität:

Die Viskosität der Testprodukte wurde mittels eines Brookfield RVT Viskosimeters mit Spindel 7 bei 50 upm und 50 °C ermittelt.

Die Fließgrenze, welche mit der Pülpigkeit negativ korreliert, war bei Produkt C bedeutend niedriger als bei den anderen Produkten, wogegen die Viskosität aller drei Produkte in einem durchaus vergleichbaren Bereich lag.

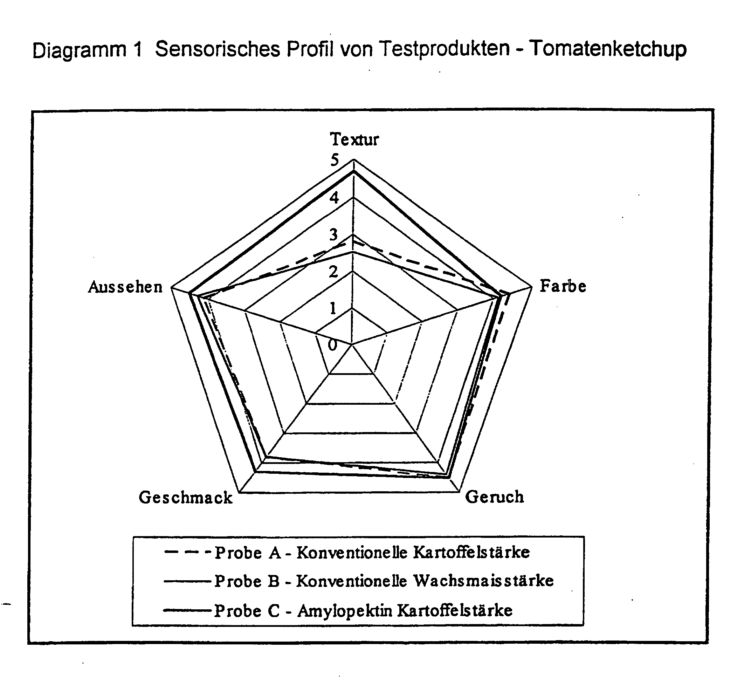

### Sensorische Analyse (vgl. Diagramm 1):

Die sensorische Analyse wurde durch einen Paneltest mit geschulten Panelisten anhand der ISO Norm 11035 "Sensory analysis - Identification and selection of descriptors for establishing a sensory profile by multidimensional approach" durchgeführt, wobei die Testprodukte mittels einer 5 Punkte Skala zu bewerten waren. 1 Punkt stand für cremige glatte Textur, 5 Punkte standen für pülpige Textur. Neben der Textur wurden auch weitere Merkmale, wie Geruch, Geschmack, Aussehen und Farbe, in die sensorische Untersuchung einbezogen, um ein sogenanntes sensorisches Profil der Testprodukte erstellen zu können, wie es aus dem anliegenden Diagramm 1 zu ersehen ist. Es ist aus diesem Diagramm zu erkennen, daß aus der Summe dieser Parameter eine grafische Darstellung erhalten werden kann, bei welcher die erhaltene Fläche ein Maß für die Qualität des Produktes darstellt. Der Unterschied zwischen konventioneller Kartoffelstärke und Wachsmaisstärke ist relativ gering. Erstaunlicherweise weist jedoch für die Amylopektin-Kartoffelstärke die erhaltene Fläche über die 5 Parameter hinweg eine qualitativ deutlich bessere Beurteilung als für die beiden anderen Stärken auf.
Auffallend ist, daß die sensorisch ermittelte Pülpigkeit von Produkt C, welches erfindungsgemäß mit Zusatz von Amylopektin-Kartoffelstärke hergestellt war, entscheidend höher als diejenige der Produkte A und B war, welche mit konventioneller Kartoffelstärke oder mit Wachsmaisstärke hergestellt worden waren. Die Textur wurde mit dem höchsten Wert von den drei untersuchten Stärken angegeben. Von den anderen Parametern wurde der Geschmack, welcher mit der Textur zusammenhängt, für das Produkt C besser bewertet als für die Produkte A und B, wogegen die Parameter Aussehen, Farbe und Geruch im wesentlichen gleiche Ergebnisse wie bei den Produkten A und B ergaben.

## Patentansprüche

1. Verfahren zur Verstärkung der pülpigen oder grießigen Textur von pülpigen oder grießigen flüssigen bis pastösen Nahrungsmitteln, **dadurch gekennzeichnet, daß** dem Nahrungsmittel Amylopektin-Kartoffelstärke, d.h. Kartoffelstärke mit mindestens 95%, vorzugsweise mindestens 98 % Amylopektingehalt, in einer die gewünschte organopeltische Veränderung des behandelten Nahrungsmittels bewirkenden Menge, gegebenenfalls in Mischung mit anderen üblichen Stärkeprodukten, zugesetzt wird.

2. Verfahren nach Patentanspruch 1, **dadurch gekennzeichnet, daß** dem Nahrungsmittel eine Amylopektin-Kartoffelstärke aus einer durch Züchtung, Mutation oder molekularbiologische bzw. gentechnische Methoden zur Unterdrückung des Amylosegehalts veränderten Kartoffel zugesetzt wird.

3. Verfahren nach einem der Patentansprüche 1 und 2, **dadurch gekennzeichnet, daß** dem Nahrungsmittel native Amylopektin-Kartoffelstärke zugesetzt wird.

4. Verfahren nach einem der Patentansprüche 1 und 2, **dadurch gekennzeichnet, daß** dem Nahrungsmittel Amylopektin-Kartoffelstärke in kaltquellender Form zugesetzt wird.

5. Verfahren nach einem der Patentansprüche 1, 2 und 4, **dadurch gekennzeichnet, daß** dem Nahrungsmittel physikalisch modifizierte Amylopektin-Kartoffelstärke zugesetzt wird.

6. Verfahren nach einem der Patentansprüche 1, 2 und 4, **dadurch gekennzeichnet, daß** dem Nahrungsmittel chemisch derivatisierte Amylopektin-Kartoffelstärke zugesetzt wird.

7. Verfahren nach Patentanspruch 6, **dadurch gekennzeichnet, daß** dem Nahrungsmittel veretherte, veresterte und bzw. oder vernetzte Amylopektin-Kartoffelstärke zugesetzt wird.

8. Verfahren nach Patentanspruch 7, **dadurch gekennzeichnet, daß** dem Nahrungsmittel acetylierte und bzw. oder adipatvernetzte Amylopektin-Kartoffelstärke zugesetzt wird.

9. Verfahren nach einem der Patentansprüche 1 bis 8, **dadurch gekennzeichnet, daß** dem Nahrungsmittel ein Gemisch zweier oder mehrerer der genannten Amylopektin-Kartoffelstärken zugesetzt wird.

10. Verfahren nach einem der Patentansprüche 1 bis 9, **dadurch gekennzeichnet, daß** die genannte Amylopektin-Kartoffelstärke mit einer Korngröße von 0,250 mm bis 2,00 mm, vorzugsweise von 0,500 mm bis 1,500 mm, zugesetzt wird.

11. Verfahren nach einem der Patentansprüche 1 bis 10, **dadurch gekennzeichnet, daß** in dem Nahrungsmittel eine um 15% bis 30 % verringerte Menge der sonst für die pülpige bzw. grießige Textur verantwortlichen Produkte eingesetzt wird.

12. Verfahren nach einem der Patentansprüche 1 bis 11 zur Herstellung von Suppen, Soßen, Dressings, Dips sowie deren Prämixen oder dehydratisierten Formen.

13. Verfahren nach einem der Patentansprüche 1 bis 11 zur Herstellung von frucht- und gemüsehaltigen Getränken und Breien sowie deren Prämixen oder dehydratisierten Formen.

14. Verfahren nach einem der Patentansprüche 1 bis 11 zur Herstellung von frucht-, nuß-, mohn- und topfenhaltigen Füllmassen sowie deren Prämixen oder dehydratisierten Formen.

15. Verfahren nach einem der Patentansprüche 1 bis 11 zur Herstellung von Grießpuddings und Desserts sowie deren Prämixen oder dehydratisierten Formen.

16. Verfahren nach einem der Patentansprüche 1 bis 12 zur Herstellung von Tomatenketchup.

17. Verfahren nach Patentanspruch 16, **dadurch gekennzeichnet, daß** der Tomatenketchup-Ausgangsmasse im Vergleich zu üblichem Tomatenketchup 15% bis 30 % weniger Tomatenpüree zugesetzt wird.

18. Verfahren nach einem der Patentansprüche 1 bis 11 zur Herstellung von Kartoffelpüree sowie dessen Prämixen oder dehydratisierten Formen.

19. Verfahren nach Patentanspruch 18, **dadurch gekennzeichnet, daß** der Kartoffelpüree-Ausgangsmasse im vergleich zu üblichem Kartoffelpüree 15% bis 30% weniger Kartoffelpulver zugesetzt wird.

20. Tomatenketchup, das native und bzw. oder physikalisch modifizierte und bzw. oder chemisch derivatisierte, vorzugsweise veretherte, veresterte und bzw. oder vernetzte, Amylopektin Kartoffelstärke mit mindestens 95%, vorzugsweise mindestens 98% Amylopektingehalt, vorzugsweise in kaltquellender Form, enthält.

21. Tomatenketchup nach Patentanspruch 20, das acetylierte und adipatvernetzte Amylopektin-Kartoffelstärke und eine im vergleich zu üblichem Tomatenketchup um 15% bis 30% verminderte Menge Tomatenpüree enthält.

22. Kartoffelpüree oder dessen dehydratisiertes Vorprodukt, das native und bzw. oder physikalisch modifizierte und bzw. oder chemisch derivatisierte, vorzugsweise veretherte, veresterte und bzw. oder vernetzte Amylopektin-Kartoffelstärke mit mindestens 95%, vorzugsweise mindestens 98% Amylopektingehalt insbesondere in kaltquellender Form, enthält.

23. Kartoffelpüree oder dessen dehydratisiertes Vorprodukt nach Patentanspruch 22, das acetylierte und adipatvernetzte Amylopektin-Kartoffelstärke und im Vergleich zu üblichem Kartoffelpüree eine um 15% bis 30% verminderte Menge an Kartoffelpulver enthält.

## Claims

1. A method of intensifying the pulpy or gritty texture of pulpy or gritty liquid to pasty foodstuffs, **characterised in that** amylopectin potato starch, i.e. potato starch having an amylopectin content of at least 95%, preferably at least 98%, is added to the foodstuff in an amount causing the desired organoleptic change of the treated foodstuff, optionally in a mixture with other, common starch products.

2. A method according to claim 1, **characterised in that** an amylopectin potato starch derived from a potato modified by breeding, mutation, or molecular-biological or genetical engineering methods for suppressing the amylose content is added to the foodstuff.

3. A method according to any one of claims 1 and 2, **characterised in that** native amylopectin potato starch is added to the foodstuff.

4. A method according to any one of claims 1 and 2, **characterised in that** amylopectin potato starch in cold-swelling form is added to the foodstuff.

5. A method according to any one of claims 1, 2 and 4, **characterised in that** physically modified amylopectin potato starch is added to the foodstuff.

6. A method according to any one of claims 1, 2 and 4, **characterised in that** a chemically derivatized amylopectin potato starch is added to the foodstuff.

7. A method according to claim 6, **characterised in that** etherified, esterified and/or cross-linked amylopectin potato starch is added to the foodstuff.

8. A method according to claim 7, **characterised in that** acetylated and/or adipate-cross-linked amylopectin potato starch is added to the foodstuff.

9. A method according to any one of claims 1 to 8, **characterised in that** a mixture of two or more of the said amylopectin potato starches is added to the foodstuff.

10. A method according to any one of claims 1 to 9, **characterised in that** the said amylopectin potato starch is added at a grain size of from 0.250 mm to 2.00 mm, preferably from 0.500 mm to 1.500 mm.

11. A method according to any one of claims 1 to 10, **characterised in that** an amount reduced by 15% to 30% of products otherwise responsible for the pulpy or gritty texture is used in the foodstuff.

12. A method according to any one of claims 1 to 11 for producing soups, sauces, dressings, dips as well as premixes or dehydrated forms thereof.

13. A method according to any one of claims 1 to 11 for producing fruit- and vegetable-containing beverages and paps as well as premixes or dehydrated forms thereof.

14. A method according to any one of claims 1 to 11 for producing fruit-, nut-, poppy-seed- and cottage-cheese-containing fillings as well as premixes or dehydrated forms thereof.

15. A method according to any one of claims 1 to 11 for producing semolina puddings and desserts as well as premixes or dehydrated forms thereof.

16. A method according to any one of claims 1 to 12 for producing tomato ketchup.

17. A method according to claim 16, **characterised in that** from 15% to 30% less tomato pulp is admixed to the tomato ketchup starting mass, compared to conventional tomato ketchup.

18. A method according to any one of claims 1 to 11 for producing mashed potatoes as well as premixes or dehydrated forms thereof.

19. A method according to claim 18, **characterised in that** from 15% to 30% less potato powder is admixed to the mashed potato starting mass, as compared to conventional mashed potatoes.

20. Tomato ketchup comprising native and/or physically modified and/or chemically derivatized, preferably etherified, esterified and/or cross-linked amylopectin potato starch having an amylopectin content of at least 95%, preferably at least 98%, preferably in cold-swelling form.

21. Tomato ketchup according to claim 20, comprising acetylated and adipate-cross-linked amylopectin potato starch and an amount of tomato pulp reduced by 15% to 30% as compared to conventional tomato ketchup.

22. Mashed potatoes or the dehydrated pre-product thereof, comprising native and/or physically modified and/or chemically derivatized, preferably etherified, esterified and/or cross-linked amylopectin potato starch having an amylopectin content of at least 95%, preferably at least 98%, in particular in cold-swelling form.

23. Mashed potatoes or the dehydrated pre-product thereof according to claim 22, comprising acetylated and adipate-cross-linked amylopectin potato starch and an amount of potato powder reduced by 15% to 30% as compared to conventional mashed potatoes.

## Revendications

1. Procédé pour le renforcement de la texture pulpeuse ou granuleuse d'aliments pulpeux ou granuleux liquides à pâteux, **caractérisé en ce que** l'on ajoute à l'aliment de l'amylopecfine-amidon de pomme de terre, c'est-à-dire de l'amidon de pomme de terre avec une teneur en amylopectine d'au moins 95 %, de préférence d'au moins 98 % dans une quantité ayant pour action la modification organoleptique souhaitée de l'aliment traité, éventuellement en mélange avec d'autres produits d'amidon classiques.

2. Procédé selon la revendication 1, **caractérisé en ce que** l'on ajoute à l'aliment un amylopectine-amidon de pomme de terre provenant d'une pomme de terre modifiée par culture, mutation ou procédés moléculaires biologiques respectivement génétiques pour supprimer la teneur en amylose.

3. Procédé selon l'une quelconque des revendications 1 et 2, **caractérisé en ce que** l'on ajoute à l'aliment de l'amylopectine-amidon de pomme de terre natif.

4. Procédé selon l'une quelconque des revendications 1 et 2, **caractérisé en ce que** l'on ajoute à l'aliment de l'amylopectine-amidon de pomme de terre dans une forme gonflant à froid.

5. Procédé selon l'une quelconque des revendications 1, 2 et 4, **caractérisé en ce que** l'on ajoute à l'aliment de l'amylopectine-amidon de pomme de terre physiquement modifié.

6. Procédé selon l'une quelconque des revendications 1, 2 et 4, **caractérisé en ce que** l'on ajoute à l'aliment de l'amylopectine-amidon de pomme de terre chimiquement dérivé.

7. Procédé selon la revendication 6, **caractérisé en ce que** l'on ajoute à l'aliment de l'amylopectine-amidon de pomme de terre éthérifié, estérifié et respectivement ou réticulé.

8. Procédé selon la revendication 7, **caractérisé en ce que** l'on ajoute à l'aliment de l'amylopectine-amidon de pomme de terre acétylé et respectivement ou adipate-réticulé.

9. Procédé selon l'une quelconque des revendications 1 à 8, **caractérisé en ce que** l'on ajoute à l'aliment un mélange de deux ou plusieurs des amylopectines-amidons de pommes de terre cités.

10. Procédé selon l'une quelconque des revendications 1 à 9, **caractérisé en ce que** l'on ajoute l'amylopectine-amidon de pomme de terre cité avec une taille de grains de 0,250 mm à 2,00 mm, de préférence de 0,500 mm à 1,500 mm.

11. Procédé selon l'une quelconque des revendications 1 à 10, **caractérisé en ce que** l'on utilise dans l'aliment une quantité abaissée de 15 % à 30 % des produits sinon responsables de la texture pulpeuse respectivement granuleuse.

12. Procédé selon l'une quelconque des revendications 1 à 11 pour la préparation de soupes, de sauces, d'assaisonnements, de dips, ainsi que de leurs prémélanges ou formes déshydratées.

13. Procédé selon l'une quelconque des revendications 1 à 11 pour la préparation de boissons et de bouillies contenant des fruits et des légumes ainsi que de leurs prémélanges ou formes déshydratées.

14. Procédé selon l'une quelconque des revendications 1 à 11 pour la préparation de farces contenant des fruits, des noix, du pavot et du fromage blanc ainsi que de leurs prémélanges ou formes déshydratées.

15. Procédé selon l'une quelconque des revendications 1 à 11 pour la préparation de puddings à la semoule et de desserts ainsi que de leurs prémélanges ou formes déshydratées.

16. Procédé selon l'une quelconque des revendications 1 à 12 pour la préparation de ketchup.

17. Procédé selon la revendication 16, **caractérisé en ce que** l'on ajoute à la masse de départ de ketchup de 15 % à 30 % de moins de purée de tomates en comparaison au ketchup classique.

18. Procédé selon l'une quelconque des revendications 1 à 11 pour la préparation de purées de pommes de terre ainsi que de leurs prémélanges ou formes déshydratées.

19. Procédé selon la revendication 18, **caractérisé en ce que** l'on ajoute à la masse de départ de purée de pommes de terre de 15 % à 30 % de moins de purée de pomme de terre en comparaison à la purée de pommes de terre classique.

20. Ketchup qui contient de l'amylopectine-amidon de pomme de terre natif et respectivement ou physiquement modifié et respectivement ou chimiquement dérivé, de préférence éthérifié, estérifié et respectivement ou réticulé avec une teneur en amylopectine d'au moins 95 %, de préférence d'au moins 98 %, de préférence dans une forme gonflant à froid.

21. Ketchup selon la revendication 20, lequel contient de l'amylopectine-amidon de pomme de terre acétylé et adipate-réticulé et une quantité comparativement abaissée de 15 % à 30 % de purée de tomate par rapport au ketchup classique.

22. Purée de pommes de terre ou pré-produit déshydraté de celle-ci, laquelle contient de l'amylopectine-amidon de pomme de terre natif et respectivement ou physiquement modifié et respectivement ou chimiquement dérivé, de préférence éthérifié, estérifié et respectivement ou réticulé avec une teneur en amylopectine d'au moins 95 %, de préférence d'au moins 98 %, en particulier dans une forme gonflant à froid.

23. Purée de pommes de terre ou pré-produit déshydraté de celle-ci selon la revendication 22, laquelle contient de l'amylopectine-amidon de pomme de terre acétylé et adipate-réticulé et une quantité de purée de pommes de terre comparativement abaissée de 15 % à 30 % par rapport à la purée de pommes de terre classique.
